# EUROPÄISCHE PATENTANMELDUNG

(11) **EP 2 204 298 A1**
(43) Veröffentlichungstag der Anmeldung: **07.07.2010**
(21) Anmeldenummer: 09180948.3
(22) Anmeldetag: 30.12.2009
(51) Int. Cl.: B60K 1/02, B60K 7/00

(54) **Fahrzeugantriebssystem mit einem Elektroantrieb und einer Akkumulatoranordnung**

(30) Priorität: 30.12.2008 AT 7582008 U
(71) Anmelder: Intellectual Capital and Asset Management GmbH, 2352 Gumpoldskirchen (AT)
(72) Erfinder: Wallner, Gerold, 2352, Gumpoldskirchen (AT)
(74) Vertreter: Müllner, Martin

(57) **Zusammenfassung**

Fahrzeugantriebssystem mit einem Elektroantrieb und einem elektrischen Energiespeicher, wie Akkumulatoren oder Hochleistungskondensatoren, insbesondere in Kombination mit einem Explosionsmotor. Um eine nachträgliche Ausrüstung eines Fahrzeugs mit einem Elektroantrieb zu ermöglichen, ist vorgesehen, dass der Elektroantrieb (1) durch mehrere miteinander gekoppelte Elektromotoren (2, 2') gebildet ist, die gemeinsam auf ein Treibrad (5) einwirken, das mit einem Antriebsrad des Fahrzeugs kuppelbar ist. Erfindungsgemäß ist eine wasserdichte Haltevorrichtung vorgesehen, die die Motoren und/oder den Energiespeicher aufnimmt, wobei diese Haltevorrichtung Hohlräume (7) zum Kühlen aufweist, die mit wärmeleitendem Material, mit einer Flüssigkeit oder mit einem Phasenübergangsmaterial gefüllt sind oder mit Wärmetauschflächen zur Luftkühlung ausgeführt sind.

## Beschreibung

### Technisches Gebiet

Die Erfindung betrifft ein Fahrzeugantriebssystem nach dem Oberbegriff des Anspruchs 1.

### Stand der Technik

Derartige Antriebssysteme sind bekannt und auch in Verwendung. Bei diesen bekannten Lösungen ist (meist zusätzlich zu einem Explosionsmotor) ein einzelner Elektromotor vorgesehen, der über Akkumulatoren versorgbar ist. Als Alternative zu Akkumulatoren kommen auch Hochleistungskondensatoren, so genannte Power Caps, in Frage. Der Elektromotor wirkt dabei in der Regel auf den üblichen Antriebsstrang des Fahrzeuges ein.

Bei einem solchen Antriebssystem ergibt sich der Nachteil, dass ein relativ großer Elektromotor erforderlich ist, um eine dem Explosionsmotor im Wesentlichen entsprechende Leistung erbringen zu können. Dabei muss bereits bei der Konstruktion des Fahrzeugs ein entsprechender Platz für den Elektromotor vorgesehen werden.

Der Vorteil solcher Fahrzeugantriebssysteme liegt besonders im Stadtverkehr mit häufigem Stop-and-Go Verkehr, bei dem ein Explosionsmotor sehr ineffektiv betrieben wird und einen hohen CO₂ -Ausstoß verursacht. Für einen derartigen Betrieb kann einfach statt des Explosionsmotors (oder auch zusätzlich zu diesem) der Elektroantrieb verwendet werden. Im Hinblick auf die CO₂-Problematik wäre es wünschenswert, den Individualverkehr zu einem hohen Anteil mit derartigen Fahrzeugantriebssystemen, so genannten Hybridantrieben, abzuwickeln. Mit den bekannten Lösungen mit Elektroantrieben mit einem einzelnen Elektromotor ist dies nicht möglich, da nicht erwartet werden kann, dass im großen Stil Fahrzeuge frühzeitig durch neuere ersetzt werden.

Es ist bereits bekannt, den Elektroantrieb durch mehrere miteinander gekoppelte Elektromotoren zu bilden, die gemeinsam auf ein Treibrad einwirken, das mit einem Antriebsrad des Fahrzeugs kuppelbar ist ( US 4685354 **,** US 2006137926 A**,** EP 1671832 A). Dadurch wird ermöglicht, bestehende Fahrzeuge mit einem Elektroantrieb nachzurüsten.

Durch diese vorgeschlagenen Maßnahmen kann eine entsprechende Anzahl von kleinen Elektromotoren vorgesehen sein. Dies ermöglicht es, die Anordnung der Elektromotore nach den jeweiligen Platzverhältnissen zu variieren und in Nischen, z.B. im Bereich der Radkästen, unterzubringen. Dabei können z.B. Motore für Modellfahrzeuge, z.B. Modellhelikopter, verwendet werden. Solche Motoren können in der Regel für kurze Zeit hohe Leistungen entwickeln. Dadurch ergibt sich ein hohes Leistungsgewicht.

Es ist also die Form des Elektroantriebs variabel, sodass sie leicht an das jeweils umzurüstende Fahrzeug angepasst werden kann. Außerdem können kostengünstige Kleinmotoren eingesetzt werden, sodass auch die Gesamtkosten für die Nachrüstung in vertretbaren Grenzen gehalten werden können.

### Kurzbeschreibung der Erfindung

Problematisch ist hier allerdings die Kühlung, da ja beim Nachrüsten grundsätzlich nur wenig Platz zur Verfügung steht. Es ist daher erfindungsgemäß vorgesehen, dass eine wasserdichte Haltevorrichtung vorgesehen ist, die die Motoren und/oder die elektrischen Energiespeicher aufnimmt, und dass diese Haltevorrichtung Hohlräume zum Kühlen aufweist, die mit wärmeleitendem Material, mit einer Flüssigkeit oder mit einem Phasenübergangsmaterial gefüllt sind oder mit Wärmetauschflächen zur Luftkühlung ausgeführt sind.

Die Idee dahinter ist, dass die Leistung nur kurz anfällt (nämlich beim Anfahren). Wenn man also die Abwärme puffern kann, dann kommt man mit relativ kleinen Kühlflächen aus, weil genug Zeit zur Verfügung steht (nämlich die Zeit bis zum nächsten Anfahren), um die Wärme abzuführen; und eine kurzfristige Überhitzung ist auf Grund der Pufferung verhindert.

Durch die Merkmale des Anspruchs 2 ergibt sich der Vorteil einer sehr einfachen Kopplung der eingesetzten Elektromotore. Dabei kann auf eine Kaskadenschaltung der Elektromotore verzichtet werden. Dabei ist ein sehr hohes Maß an Freiheit bei der Anordnung der Elektromotore gegeben.

Durch die Merkmale des Anspruchs 3 und auch des Anspruchs 5 ergibt sich der Vorteil eines sehr kompakten Aufbaus des Elektroantriebs, wobei mit einem Minimum an Einzelteilen das Auslangen gefunden wird.

Eine in konstruktiver Hinsicht sehr einfache Lösung ergibt sich durch die Merkmale des Anspruchs 4. Auf diese Weise kann der Elektroantrieb auf einfache Weise zugeschaltet werden und den Antrieb des Fahrzeugs übernehmen bzw. unterstützen.

Wenn zusätzlich die Merkmale des Anspruchs 6 vorgesehen sind, dann kann der Elektroantrieb zur Rückgewinnung kinetischer Energie und deren Speicherung in der Akkumulatoranordnung in gleicher Weise auch als Generator zugeschaltet werden.

### Kurze Beschreibung der Zeichnungsfiguren

Die Erfindung wird nun anhand der Zeichnungen näher erläutert. Dabei zeigen: Fig. 1 und Fig. 2 Ansicht und Draufsicht einer ersten Anordnung von Elektromotoren; Fig. 3 und Fig. 4 Ansicht und Draufsicht einer zweiten Anordnung von Elektromotoren; Fig. 5 bis Fig. 7 Ansichten weiterer Anordnungen von Elektromotoren; und Fig. 8 zeigt die Anordnung der Elektromotoren in einem Gehäuse mit erfindungsgemäßer Kühlung bzw. Wärmepufferung.

### Beschreibung der Ausführungsarten

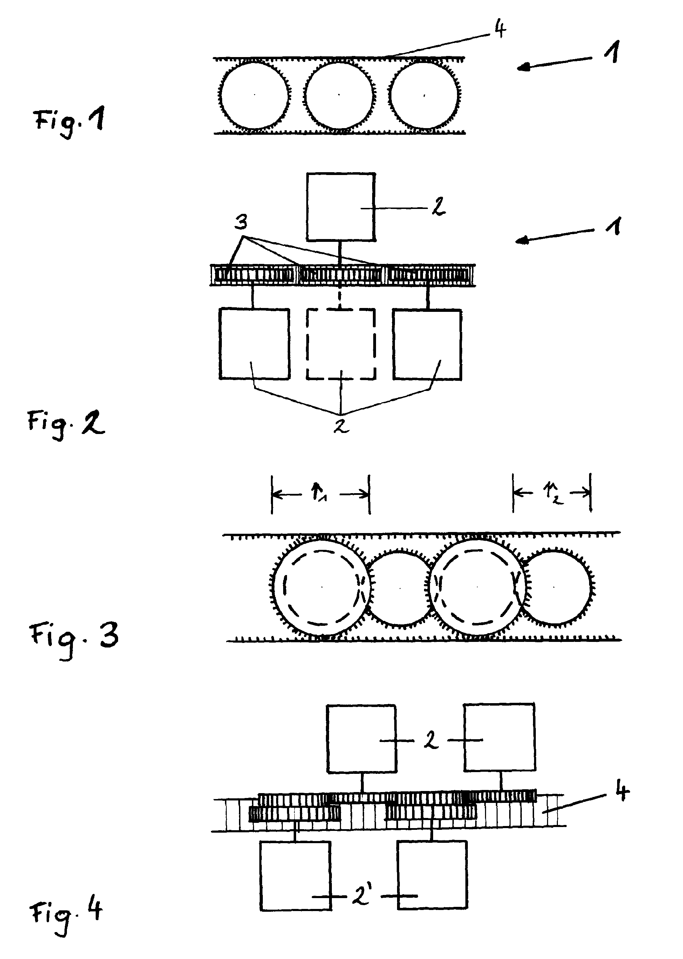

Bei der Ausführungsform eines Elektroantriebs 1 für ein Fahrzeugantriebssystem nach den Fig. 1 und 2 sind Elektromotore 2 voneinander beabstandet angeordnet. Diese Elektromotore sind mit Ritzeln 3 versehen. Diese Ritzel 3 stehen mit einem Zahnriemen 4 in Eingriff, der weiters mit einem nicht dargestellten Treibrad in Antriebsverbindung steht. Dieses Treibrad ist mit einem nicht dargestellten Antriebsrad eines Fahrzeugs kuppelbar. Dabei kann das Treibrad mit einer Verzahnung des Antriebsrades (Felge) oder einer mit diesem drehfest verbundenen Bremsscheibe in Eingriff gebracht werden. Die Verzahnung des Antriebsrades kann auf der innen liegenden Seite der Felge direkt oder durch ein Hohlzahnrad, das als zweite, innere Felge montiert wird, ausgeführt werden. Eine solche innere Felge erhöht die Spurbreite nur minimal und ermöglicht die Weiterverwendung der bestehenden reifentragenden Felgen.

Bei der Ausführungsform nach den Fig. 1 und 2 sind die Elektromotore 2 in Bezug auf den Zahnriemen in Draufsicht an verschiedenen Seiten desselben angeordnet. Die Elektromotoren können an beiden Seiten oder an nur einer Seite des Zahnriemens angeordnet sein. Weiters können zwei gegenüberliegende Elektromotoren mit einem Ritzel verbunden sein, dargestellt durch den strichlierten Motor 2. Dabei kann auf die jeweils gegebenen Platzverhältnisse Rücksicht genommen werden, wodurch auch ein nachträglicher Einbau eines solchen Elektroantriebs in ein bestehendes Fahrzeug möglich ist.

Bei der Ausführungsform nach den Fig. 3 und 4 sind zwei Gruppen von Elektromotoren 2, 2' vorgesehen, die in Draufsicht an verschiedenen Seiten des Zahnriemens 4 angeordnet sind. Die Motore 2' weisen Stufenzahnräder auf, deren größere Stufe den Zahnriemen 4 antreibt. Die kleinere Stufe kämmt mit den Ritzeln der Motore 2, die somit den Zahnriemen 4 indirekt antreiben. Der Zahnriemen 4 steht mit einem nicht dargestellten Treibrad in Antriebsverbindung. Gegenüber der Ausführungsform nach Fig. 1 können die Motore näher zusammengerückt werden, so nahe, dass ihre Ritzel miteinander kämmen. Ein weiterer Vorteil besteht darin, dass alle Motore 2, 2' in die gleiche Richtung (im Uhrzeigersinn oder gegen den Uhrzeigersinn) laufen.

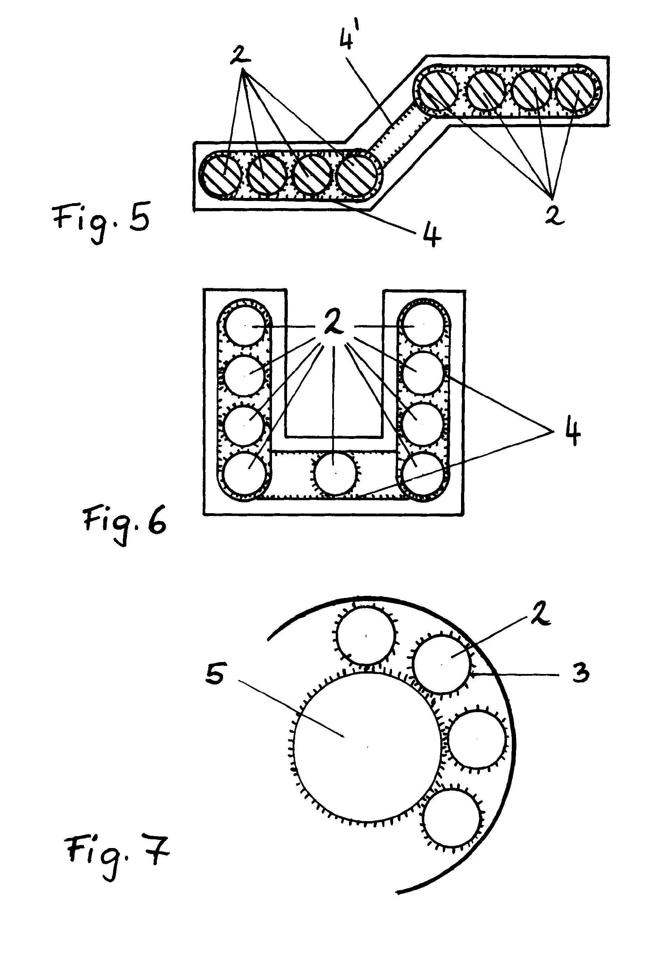

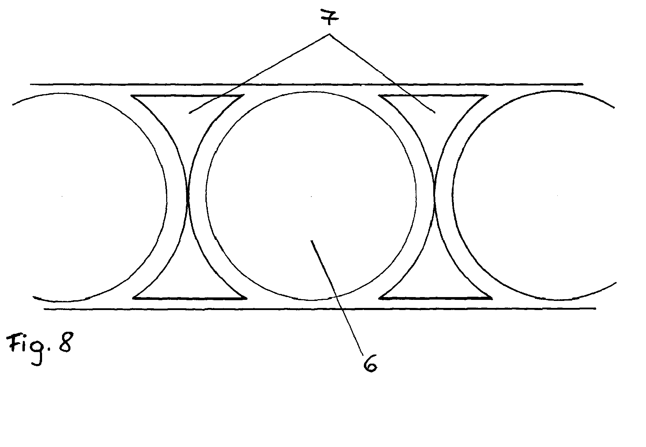

Die Fig. 5 und 6 zeigen weitere Anordnungen von Elektromotoren 2. Bei beiden Ausführungsformen sind die Elektromotore 2 mittels eines Zahnriemens 4 miteinander und mit einem nicht dargestellten Treibrad gekoppelt. Bei der Ausführungsform nach Fig. 7 kämmen die Ritzel 3 der Motore 2 mit einem Treibrad 5, das mit einem nicht dargestellten Antriebsrad eines Fahrzeugs kuppelbar ist. Bei dieser Anordnung erfolgt die Kopplung der Elektromotore über das Treibrad 5. Die Elektromotoren sind erfindungsgemäß in einem wasserdichten Gehäuse, insbesondere aus Metall gefertigt, montiert. Die in Fig. 8 dargestellten Aufnahmehohlräume 6 für die Motoren sind auf deren Außenseiten teilweise durch Kühlhohlräume 7 begrenzt. Die Kühlhohlräume können durch Kühlmaterialien, wie z.B. besonders gut wärmeleitende Metalle oder Phasenübergangsmaterialien (Latenzwärme) gefüllt werden oder mit zusätzlichen Wärmetauschflächen und Luftkühlung ausgeführt werden. In Kombination mit einem Explosionsmotor und einem herkömmlichen Bremssystem kann der Elektroantrieb als autonomer Slave betrieben werden. Durch geeignete Sensoren und die Möglichkeit der Aktivierung durch den Fahrzeuglenker kann der Elektroantrieb bei Beschleunigungsvorgängen den Explosionsmotor oder das Bremssystem unterstützen oder ersetzen. Die volle Funktionalität des Explosionsmotors und des Bremssystems bleiben gewährleistet.

## Patentansprüche

1. Fahrzeugantriebssystem mit einem Elektroantrieb und elektrischen Energiespeichern, wie Akkumulatoren oder Hochleistungskondensatoren, insbesondere in Kombination mit einem Explosionsmotor, wobei der Elektroantrieb (1) durch mehrere miteinander gekoppelte Elektromotoren (2, 2') gebildet ist, die gemeinsam auf ein Treibrad (5) einwirken, das mit einem Antriebsrad des Fahrzeugs kuppelbar ist, **dadurch gekennzeichnet, dass** eine wasserdichte Haltevorrichtung vorgesehen ist, die die Motoren und/oder die elektrischen Energiespeicher aufnimmt, und dass diese Haltevorrichtung Hohlräume (7) zum Kühlen aufweist, die mit wärmeleitendem Material, mit einer Flüssigkeit oder mit einem Phasenübergangsmaterial gefüllt sind oder mit Wärmetauschflächen zur Luftkühlung ausgeführt sind.

2. Fahrzeugantriebssystem nach Anspruch 1, **dadurch gekennzeichnet, dass** die Elektromotoren (2, 2') bzw. deren Ritzel (3) über mindestens einen Zahnriemen (4, 4') miteinander gekoppelt sind.

3. Fahrzeugantriebssystem nach Anspruch 1, **dadurch gekennzeichnet, dass** die Elektromotoren (2, 2') bzw. deren Ritzel (3) gemeinsam mit einem eine Verzahnung aufweisenden Treibrad (5) kämmen.

4. Fahrzeugantriebssystem nach einem der Ansprüche 1 bis 3, **dadurch gekennzeichnet, dass** das Treibrad (5) mit einer mit einer Verzahnung versehenen Bremsscheibe oder mit einer mit einer Verzahnung versehenen Felge des Antriebsrades mittels einer Kupplung in Eingriff bringbar ist.

5. Fahrzeugantriebssystem nach einem der Ansprüche 1 bis 4, **dadurch gekennzeichnet, dass** zwei direkt gegenüberliegende Elektromotoren mit einem gemeinsamen Ritzel drehfest verbunden sind.

6. Fahrzeugantriebssystem nach einem der Ansprüche 1 bis 5, **dadurch gekennzeichnet, dass** die Elektromotoren zu Generatoren umschaltbar sind, sodass kinetische Energie in elektrische Energie umgewandelt und in der Akkumulatoranordnung gespeichert werden kann.
